# EUROPÄISCHE PATENTSCHRIFT

(11) **EP 2 098 018 B1**
(45) Veröffentlichungstag und Bekanntmachung des Hinweises auf die Patenterteilung: **27.04.2016**
(21) Anmeldenummer: 07847359.2
(22) Anmeldetag: 26.11.2007
(51) Int. Cl.: H04L 12/403, H04L 12/437

(54) **KOMMUNIKATIONSSYSTEM MIT EINER MASTER-SLAVE-STRUKTUR**
COMMUNICATION SYSTEM HAVING A MASTER/SLAVE STRUCTURE
SYSTÈME DE COMMUNICATION PRÉSENTANT UNE STRUCTURE MAÎTRE-ESCLAVE

(30) Priorität: 27.11.2006 DE 102006055889
(43) Veröffentlichungstag der Anmeldung: 09.09.2009
(73) Patentinhaber: Beckhoff Automation GmbH, 33415 Verl (DE)
(72) Erfinder: BÜTTNER, Holger, 12157 Berlin (DE); WEBER, Karl, 90518 Altdorf (DE)
(74) Vertreter: Patentanwaltskanzlei WILHELM & BECK
(86) Internationale Anmeldenummer: PCT/EP2007/062831
(87) Internationale Veröffentlichungsnummer: WO 2008/065087

(56) Entgegenhaltungen:
- WO-A-91/14324
- DE-A1- 19 815 097
- US-A1- 2004 008 720

## Beschreibung

Die Erfindung betrifft ein Kommunikationssystem mit einer Master-Slave-Struktur und eine Mastereinheit für ein solches Kommunikationssystem.

In der Fertigungs- und Automatisierungstechnik werden zunehmend serielle Bussysteme eingesetzt, bei denen die dezentral angeordneten Geräte einer Maschinenperipherie wie E/A-Module, Messumformer, Antriebe, Ventile und Bedienerterminals über ein leistungsfähiges Echtzeit-Kommunikationssystem mit Automatisierungs-, Engineerings- oder Visualisierungssystemen kommunizieren. Alle Teilnehmer sind dabei über einen seriellen Bus, vorzugsweise über einen Feldbus miteinander vernetzt, wobei der Datenaustausch über den Bus in der Regel auf der Grundlage des Master-Slave-Prinzips ausgeführt wird.

Die aktiven Busteilnehmer am Bussystem, in der Regel Steuergeräte, sind im Besitz einer Buszugriffsberechtigung und bestimmen den Datentransfer auf dem Bus. Die aktiven Busteilnehmer werden im Folgenden als die Mastereinheiten im seriellen Bussystem bezeichnet. Passive Busteilnehmer sind dagegen in der Regel Maschinenperipheriegeräte. Sie erhalten keine Buszugriffsberechtigung, d.h. sie dürfen nur empfangene Informationssignale quittieren oder auf Anfrage einer Mastereinheit Informationssignale an diese übermitteln. Die passiven Busteilnehmer werden im Folgenden als Slaveeinheiten im seriellen Bussystem bezeichnet.

Feldbussysteme mit einer Master-Slave-Struktur werden im Allgemeinen, um eine aufwändige Verkabelung zu vermeiden, in Ringtopologie ausgeführt, wobei alle Busteilnehmer an einen ringförmigen Übertragungsweg angeschlossen sind. Ein von der Mastereinheit erzeugtes Informationssignal wird von der Mastereinheit in den ringförmigen Übertragungsweg eingespeist und durchläuft nacheinander die seriell an den ringförmigen Übertragungsweg angeschlossenen Slaveeinheiten, um dann wieder von der Mastereinheit empfangen und ausgewertet zu werden.

Die Informationssignale werden von der Mastereinheit in der Regel in Datenpaketen organisiert, die sich aus Steuerdaten und Nutzdaten zusammensetzen, wobei vorzugsweise der Ethernet-Standard verwendet wird, der Datenpakete mit einer Länge von bis zu 1500 Byte bei einer gleichzeitig hohen Übertragungsgeschwindigkeit von 100 Mbit/sec ermöglicht. Jede der an den ringförmigen Übertragungsweg angeschlossenen Slaveeinheiten verarbeitet dann die für ihn bestimmten Nutzdaten der von der Mastereinheit auf dem ringförmigen Übertragungsweg eingespeisten Ethernet-Telegramme.

Die Master-Slave-Kommunikationssysteme mit Ringstruktur sind in der Regel so aufgebaut, dass die Mastereinheit eine Sendeeinheit als Dateneinkoppelstelle und eine Empfangseinheit als Datenauskoppelstelle aufweist. Die einzelnen Slaveeinheiten sind dann am Übertragungsweg zu einem Ring zusammengeschlossen, wobei jeder Teilnehmer mit zwei Nachbarn, der erste und der letzte Teilnehmer im Ring mit der Mastereinheit verbunden ist. Die Übertragung der Datenpakete erfolgt dabei in eine Richtung ausgehend von der Mastereinheit über deren Sendeeinheit zur ersten angeschlossenen Slaveeinheit und von dort zur nächsten, bis die in Datenübertragungsrichtung letzte Slaveeinheit im Ring erreicht ist, und dann zurück zur Empfangseinheit der Mastereinheit.

Jede Slaveeinheit weist zum Empfang der umlaufenden Datenpakete vom vorherigen Teilnehmer einen ersten Anschluss und zur Weitergabe an den nachfolgenden Teilnehmer einen zweiten Anschluss auf, wobei zwischen den beiden Anschlüssen eine Verarbeitungseinrichtung angeordnet ist, um die durch die Slaveeinheit durchlaufenden Datenpakete zu verarbeiten.

Eine Anforderung an Master-Slave-Kommunikationssysteme, insbesondere beim Einsatz in der Fertigungs- und Prozessautomatisierung, ist eine hohe Fehlertoleranz, also die Fähigkeit des Kommunikationssystems, trotz des Auftretens von Fehlern die geforderte Funktion, d.h. zum Beispiel die Herstellung eines Werkstücks zu gewährleisten. Fehler im Kommunikationssystem, die ohne Beeinträchtigung überstanden werden müssen, sind dabei neben Fehlern in den Datenpaketen auch der Ausfall eines Teilnehmers insbesondere der Mastereinheit im Übertragungsweg bzw. eine Unterbrechung des Übertragungsweges, beispielsweise durch physikalisches Durchtrennen des Übertragungsmediums.

Ein Master-Slave-Kommunikationssystem mit zwei Master-Knoten, um den Ausfall eines Master-Knotens zu kompensieren, und einer Doppelleitungsstruktur, um bei einer Unterbrechung zwischen den Leitungen umschalten zu können, ist aus der US 2004/0008720 A1 bekannt. Ein ähnliches System ist in der US 2005/0129037 A1 beschrieben. In der US 2003/0005368 A1 ist ein Ringkommunikationssystem mit einer Doppelringstruktur, bei der die Knoten eine Umschaltfunktion aufweisen, um bei einer Unterbrechung der Leitungsstruktur die Kommunikation auf dem Ringnetz aufrecht zu erhalten. Die WO 91/14324 A offbart eine Mastereinheit und ein Kommunikationssystem mit einer Doppelringstruktur und mehreren Mastereinheiten, wobei die Mastereinheiten und die Slave-Einheiten jeweils Umschalteinheiten aufweisen, die die Datenübertragung im Ringnetz überwachen. In den Mastereinheiten kommuniziert die Umschalteinrichtungen dabei ständig mit deren Steuereinheiten.

Aufgabe der vorliegenden Erfindung ist es, ein Kommunikationssystem mit einer Master-Slave-Struktur und eine Mastereinheit für ein solches Kommunikationssystem bereitzustellen, die bei einem minimalen Hardware und Schaltaufwand die Möglichkeit einer Rekonfiguration der Master-Slave-Struktur in Echtzeit bei einer Unterbrechung des Übertragungsweges, insbesondere bei Ausfall der Mastereinheit ermöglichen.

Diese Aufgabe wird eine Mastereinheit nach Anspruch 1 und ein Kommunikationssystem nach Anspruch 4. Bevorzugte Weiterbildungen sind in den abhängigen Ansprüchen angegeben.

Erfindungsgemäß sind in einem Kommunikationssystem eine erste und eine zweite Mastereinheit und wenigstens eine Slaveeinheit über eine Doppelleitungsstruktur miteinander verbunden sind. Die erste und die zweite Mastereinheit weisen jeweils eine Sendeeinheit zum Senden von Datensignalen, die über erste Anschlüsse mit der Doppelleitungsstruktur verbunden sind, jeweils eine Empfangseinheit zum Empfangen von Datensignalen, die über zweite Anschlüsse mit der Doppelleitungsstruktur verbunden sind, und jeweils eine Steuereinheit zum Übertragen von Datensignalen, die mit den Sendeeinheiten und den Empfangseinheiten verbunden sind, auf. Die zweite Master-Einheit umfasst weiter eine Master-Kopplungseinrichtung, die zwischen die Steuereinheit, die Empfangseinheit und die Sendeeinheit geschaltet ist, um in einem ersten Betriebsmodus bei Empfang von Datensignalen der ersten Mastereinheit auf der Doppelleitungsstruktur die Steuereinheit von der Empfangseinheit und der Sendeeinheit zu trennen und um in einem zweiten Betriebsmodus bei Unterbrechung des Empfang von Datensignalen der ersten Mastereinheit auf der Doppelleitungsstruktur die Steuereinheit mit der Empfangseinheit und der Sendeeinheit zu verbinden, um eine Datenübertragung auf der Doppelleitungsstruktur durchzuführen.

Erfindungsgemäß ist die zweite Ersatz-Mastereinheit in die Datenübertragungskette von erster regulärer Mastereinheit zu den Slaveeinheiten geschaltet, um bei Auftreten eines Streckenfehlers, insbesondere bei Ausfall der ersten regulären Mastereinheit, die Datenübertragung fortzuführen.

Eine erfindungsgemäße Mastereinheit zum Einsatz als Ersatz-mastereinheit weist eine Sendeeinheit zum Senden von Datensignalen, die über einen ersten Anschluss mit einem ersten Kommunikationspfad verbunden werden kann, eine Empfangseinheit zum Empfangen von Datensignalen, die über einen zweiten Anschluss mit einem Kommunikationspfad verbunden werden kann, und eine Steuereinheit zum Übertragen von Datensignalen und eine Master-Kopplungseinrichtung auf. Die Master-Kopplungseinrichtung ist dabei zwischen die Steuereinheit, die Sendeeinheit und die Empfangseinheit geschaltet, um in einem ersten Betriebsmodus, d.h. im Normalbetrieb, die Steuereinheit von der Empfangseinheit und der Sendeeinheit zu trennen und um in einem zweiten Betriebsmodus, d.h. im Streckenfehlerbetrieb, die Steuereinheit mit der Empfangseinheit und der Sendeeinheit zu verbinden, um eine Datenübertragung auf dem ersten und dem zweiten Kommunikationspfad durchzuführen.

Mit der erfindungsgemäßen Auslegung eines Master-Slave-Kommunikationssystems bzw. einer Ersatz-Mastereinheit ist es möglich, bei einem Streckenfehler, insbesondere bei Ausfall der regulären Mastereinheit, auf einfache Weise die Datenübertragung durch die Ersatz-Mastereinheit fortzuführen. Erfindungsgemäß wird der Datenübertragungsweg automatisch so rekonfiguriert, dass die Ersatz-Mastereinheit die Datenübertragung in dem von der regulären Mastereinheit abgetrennten Teil des Master-Slave-Kommunikationssystems übernimmt.

Gemäß einer erfindungsgemäßen Ausführungsform sind in dem Kommunikationssystem die erste und die zweite Mastereinheit vorgesehen, zwischen denen die wenigstens eine Slaveeinheit angeordnet ist. Die Slaveeinheit weist eine Slave-Kopplungseinrichtung und einen ersten, zweiten, dritten und vierten Anschluss auf. Der erste Anschluss der Slaveeinheit ist mit der Sendeeinheit der ersten Mastereinheit und der zweite Anschluss der Slaveeinheit mit der Empfangseinheit der zweite Mastereinheit über einen ersten Kommunikationspfad der Doppelleitungsstruktur verbunden. Der dritte Anschluss der Slaveeinheit ist mit der Sendeeinheit der zweiten Mastereinheit und der vierte Anschluss der Slaveeinheit mit der Empfangseinheit der ersten Mastereinheit über einen zweiten Kommunikationspfad der Doppelleitungsstruktur verbunden. Im ersten Betriebsmodus, d.h. im Normalbetrieb, schließt die Master-Kopplungseinrichtung der zweite Mastereinheit den ersten mit der Sendeeinheit verbundenen Anschluss und den zweiten mit der Empfangseinheit verbundenen Anschluss der zweite Mastereinheit kurz und die Datenübertragung erfolgt ausschließlich durch die erste Master-Einheit. Im zweiten Betriebsmodus, d.h. bei Auftreten eines Streckenfehlers, schließt die Slave-Kopplungseinrichtung der Slaveeinheit den ersten Anschluss der Slaveeinheit mit dem vierten Anschluss der Slaveeinheit kurz. Gleichzeitig öffnet die Master-Kopplungseinrichtung der zweite Mastereinheit zur Datenübertragung auf dem ersten und zweiten Kommunikationspfad den Kurzschluss von erstem und zweitem Anschluss der zweite Mastereinheit und verbindet die Steuereinheit mit der Sendeeinheit und der Empfangseinheit zum Datenübertragungsbetrieb.

Gemäß einer erfindungsgemäßen Ausführungsform der Mastereinheit schließt die Master-Kopplungseinrichtung im ersten Betriebsmodus den ersten mit der Sendeeinheit verbundenen Anschluss und den zweiten mit der Empfangseinheit verbundenen Anschluss kurz und hebt im zweiten Betriebsmodus den Kurzschluss von erstem und zweitem Anschluss auf.

Gemäß einer weiteren erfindungsgemäßen Ausführungsform des Kommunikationssystem weist die Slaveeinheit wenigstens einen ersten, zweiten und dritten Anschluss auf, wobei der erste Anschluss der Slaveeinheit mit der Sendeeinheit der ersten Mastereinheit und der zweite Anschluss der Slaveeinheit mit der Empfangseinheit der zweite Mastereinheit über einen ersten Kommunikationspfad der Doppelleitungsstruktur verbunden sind. Der dritte Anschluss der Slaveeinheit ist mit der Sendeeinheit der zweiten Mastereinheit über einen zweiten Kommunikationspfad der Doppelleitungsstruktur und ein dritter Anschluss der zweiten Mastereinheit ist mit der Empfangseinheit der ersten Mastereinheit über einen dritten Kommunikationspfad der Doppelleitungsstruktur verbunden. Im ersten Betriebsmodus, d.h. bei Normalbetrieb, schließt die Master-Kopplungseinrichtung der zweite Mastereinheit den zweiten mit der Empfangseinheit verbundenen Anschluss und den dritten Anschluss der zweite Mastereinheit kurz und die Datenübertragung erfolgt ausgehend von der ersten Mastereinheit über den ersten und dritten Kommunikationspfad. Im zweiten Betriebsmodus, d.h. bei Auftreten eines Streckenfehler, schließt die Slave-Kopplungseinrichtung der Slaveeinheit den ersten Anschluss der Slaveeinheit mit dem vierten Anschluss der Slaveeinheit kurz und die Master-Kopplungseinrichtung der zweite Mastereinheit hebt zur Datenübertragung auf dem ersten und zweiten Kommunikationspfad den Kurzschluss von zweitem und drittem Anschluss der zweite Mastereinheit auf und verbindet die Steuereinheit mit der Sendeeinheit und der Empfangseinheit zum Datenübertragungsbetrieb.

Gemäß einer weiteren erfindungsgemäßen Ausführungsform der Mastereinheit ist ein mit einem dritten Kommunikationspfad verbindbarer dritter Anschluss vorgesehen. Die Master-Kopplungseinrichtung schließt dann im ersten Betriebsmodus den zweiten mit der Empfangseinheit verbundenen Anschluss und den dritten Anschluss kurz und hebt im zweiten Betriebsmodus den Kurzschluss von zweitem und drittem Anschluss auf.

Gemäß einer weiteren erfindungsgemäßen Ausführungsform weist die Slaveeinheit einen ersten und einen zweiten Anschluss auf, wobei der erste Anschluss der Slaveeinheit mit der Empfangseinheit der zweiten Mastereinheit über einen ersten Kommunikationspfad der Doppelleitungsstruktur, der zweite Anschluss der Slaveeinheit mit der Sendeeinheit der zweite Mastereinheit über einen zweiten Kommunikationspfad der Doppelleitungsstruktur, ein dritter Anschluss der zweiten Mastereinheit mit der Empfangseinheit der ersten Mastereinheit über einen dritten Kommunikationspfad der Doppelleitungsstruktur und ein vierter Anschluss der zweiten Mastereinheit mit der Sendeeinheit der ersten Mastereinheit über einen vierten Kommunikationspfad der Doppelleitungsstruktur verbunden sind. Im ersten Betriebsmodus, d.h. im Normalbetrieb, schließt die Master-Kopplungseinrichtung der zweiten Mastereinheit jeweils den ersten mit der Sendeeinheit verbundenen Anschluss und den vierten Anschluss der zweiten Mastereinheit und den zweiten mit der Empfangseinheit verbundenen Anschluss und den dritten Anschluss der zweiten Mastereinheit kurz und die Datenübertragung erfolgt ausschließlich durch die erste Master-Einheit. Im zweiten Betriebsmodus, d.h. bei Auftreten eines Streckenfehlers, hebt die Master-Kopplungseinrichtung der zweiten Mastereinheit zur Datenübertragung auf dem ersten und zweiten Kommunikationspfad den Kurzschluss von erstem und viertem Anschluss der zweiten Mastereinheit und den Kurzschluss von zweitem und drittem Anschluss der zweiten Mastereinheit auf und verbindet die Steuereinheit mit der Sendeeinheit und der Empfangseinheit zum Datenübertragungsbetrieb.

Gemäß einer weiteren erfindungsgemäßen Ausführungsform der Mastereinheit ist ein mit einem dritten Kommunikationspfad verbindbarer dritter Anschluss und ein mit einem vierten Kommunikationspfad verbindbarer vierter Anschluss vorgesehen. Die Master-Kopplungseinrichtung schließt im ersten Betriebsmodus den zweiten und den dritten Anschluss sowie den ersten den vierten Anschluss kurz und hebt im zweiten Betriebsmodus den Kurzschluss von zweitem und drittem Anschluss sowie von erstem und viertem Anschluss auf.

Bei der ersten erfindungsgemäßen Variante ist der Übertragungsweg als physikalische Linie mit einer Doppelleitungsstruktur ausgebildet, wobei die Slaveeinheit jeweils zwei Ports mit jeweils zwei Anschlüssen, an die die Doppelleitungsstruktur angeschlossen sind, umfasst. Die Übertragungskette wird auf der einen Seite durch die reguläre Mastereinheit und auf der anderen Seite durch die Ersatz-Mastereinheit abgeschlossen. Im Normalbetrieb sendet und empfängt die reguläre Mastereinheit über die Doppelleitungsstruktur, wobei die Ersatz-Mastereinheit als Leitungsabschluss dient, über den die Doppelleitung kurzgeschlossen ist, um die von der regulären Mastereinheit auf der ersten Leitung eintreffenden Datenpakete auf der zweiten Leitung zur regulären Mastereinheit rückzukoppeln. Bei Auftreten eines Streckenfehlers, insbesondere bei Ausfall der regulären Mastereinheit, schließt die Slaveeinheit ihren an die reguläre Mastereinheit angekoppelten Port kurz. Gleichzeitig öffnet die Master-Kopplungseinrichtung der Ersatz-Mastereinheit den internen Kurzschluss und verbindet die eine erste Steuerleitung der Steuereinheit mit der Sendeeinheit und eine andere zweite Steuerleitung der Steuereinheit mit der Empfangseinheit, um die Datenübertragung aufzunehmen.

Bei der zweiten erfindungsgemäßen Variante ist das Master-Slave-Kommunikationssystem als Ringstruktur ausgebildet, wobei die Ersatz-Mastereinheit im Normalbetrieb in Datenübertragungsrichtung vor der Empfangseinheit der regulären Mastereinheit angeordnet ist, um die übertragenen Datenpakete auf die reguläre Mastereinheit rückzukoppeln. Im Fehlerbetrieb bei Auftreten eines Streckenfehlers, insbesondere bei Ausfall der reguläre Mastereinheit, öffnet die Master-Kopplungseinrichtung diesen Kurzschluss und verbindet die Sendeeinheit und die Empfangseinheit mit der Steuereinheit, um die Datenübertragung aufzunehmen.

Bei der dritten erfindungsgemäßen Variante ist das Master-Slave-Kommunikationssystem als Ringstruktur ausgebildet, wobei die Ersatz-Mastereinheit im Normalbetrieb in Datenübertragungsrichtung zwischen den Slaveeinheiten und der regulären Mastereinheit angeordnet ist, um die Datenpakete der regulären Mastereinheit durchzureichen. Im Fehlerbetrieb bei Auftreten eines Streckenfehlers, insbesondere bei Ausfall der regulären Mastereinheit, öffnet die Master-Kopplungseinrichtung diese Kurzschlüsse und verbindet die Steuereinheit mit der Sendeeinheit und der Empfangseinheit, um die Datenübertragung aufzunehmen.

Mit diesen drei erfindungsgemäßen Auslegungen eines Master-Slave-Kommunikationssystems mit einer Ersatz-Mastereinheit ist es möglich, bei einem Streckenfehler, insbesondere bei Ausfall der regulären Mastereinheit, auf einfache Weise die Datenübertragung durch die Ersatz-Mastereinheit fortzuführen. Erfindungsgemäß wird der Datenübertragungsweg automatisch so rekonfiguriert, dass die Ersatz-Mastereinheit die Datenübertragung in dem von der regulären Mastereinheit abgetrennten Teil des Master-Slave-Kommunikationssystems übernimmt.

Mit diesen drei erfindungsgemäßen Auslegungen eines Master-Slave-Kommunikationssystems mit einer Ersatz-Mastereinheit ist es möglich, bei einem Streckenfehler, insbesondere bei Ausfall der regulären Mastereinheit, auf einfache Weise die Datenübertragung durch die Ersatz-Mastereinheit fortzuführen. Erfindungsgemäß wird der Datenübertragungsweg automatisch so rekonfiguriert, dass die Ersatz-Mastereinheit die Datenübertragung in dem von der regulären Mastereinheit abgetrennten Teil des Master-Slave-Kommunikationssystems übernimmt.

Die Erfindung wird anhand der beigefügten Zeichnungen näher erläutert. Es zeigen:
Fig. 1 eine schematische Darstellung eines erfindungsgemäßen Kommunikationssystems mit einer Master-Slave-Struktur gemäß einer ersten Ausführung mit einer Doppelleitungsstruktur, wobei Fig. 1A den Normalbetrieb und Fig. 1B den Rekonfigurationsbetrieb darstellen;
Fig. 2 eine schematische Darstellung eines erfindungsgemäßen Kommunikationssystems mit Master-Slave-Struktur gemäß einer zweiten Ausführungsform mit einer Ersatzringstruktur, wobei
Fig. 2A den Normalbetrieb und Fig. 2B den Rekonfigurationsbetrieb darstellen; und
Fig. 3 eine schematische Darstellung eines erfindungsgemäßen Kommunikationssystems mit einer Master-Slave-Struktur gemäß einer dritten Ausführungsform, wobei Fig. 3A den Normalbetrieb und Fig. 3B den Rekonfigurationsbetrieb darstellen.

In der Automatisierungstechnik werden zunehmend Feldbussysteme eingesetzt, bei denen verteilt angeordnete Geräte der Maschinenperipherie mit Automatisierungs- ,Engineerings- und Visualisierungssystemen über einen Feldbus kommunizieren. Das Feldbussystem weist in der Regel einen seriellen Bus auf, welcher beispielsweise eine elektrische Leitung, ein Lichtleiter oder ein Radiokabel sein kann. An diesem Feldbus sind alle Busteilnehmer angeschlossen, wobei zwischen aktiven und passiven Busteilnehmern unterschieden wird.

Die aktiven Busteilnehmer am Feldbussystem sind die Mastereinheiten, die den Datenverkehr auf dem Bus regeln. Eine solche Mastereinheit ist z.B. ein Industrie-PC, der als Prozessleitrechner in einer Fertigungsstraße dient. Die Mastereinheit besitzt eine Buszugriffsberechtigung und kann Daten ohne externe Aufforderung auf dem Feldbus ausgeben. Die passiven Busteilnehmer am Bussystem sind die Maschinenperipheriegeräte wie z. B. E/A-Geräte, Ventile, Antriebe und Messumformer. Sie dienen als Slaveeinheiten und besitzen keine Buszugriffsberechtigung, d.h. sie dürfen nur empfangene Datensignale quittieren oder auf Anfrage einer Mastereinheit Datensignale über diese übermitteln.

Als Kommunikationsstandard zur Datenübertragung in Master-Slave-Kommunikationssystemen wird vorzugsweise das Ethernet-Konzept eingesetzt. Bei Ethernet-Kommunikationssystem werden die zu übermittelnden Daten in Form von Datenpaketen, im Weiteren auch als Telegramme bezeichnet, mit einem vorgegebenen Format verkapselt. Die Ethernet-Telegramm können dabei eine Datenlänge von bis zu 1000 Bytes aufweisen, wobei zusätzlich zu den Nutzdaten Steuerdaten, die eine Anfangskennung, eine Ziel- und Quelladresse und einen Datenpaket-Typ und einen Fehlermechanismus aufweisen, enthalten sind.

Ethernet-Kommunikationssysteme mit einer Master-Slave-Struktur sind vorzugsweise so ausgelegt, dass die einzelnen Mastereinheiten über das Übertragungsmedium zu einer Kette zusammengeschlossen sind, wobei jede Slaveeinheit mit zwei Nachbarn, die erste und die letzte Slaveeinheit in der Kette dabei mit der Mastereinheit verbunden sind, so dass sich eine Ringstruktur ergibt. Die Datenübertragung erfolgt in eine Richtung ausgehend von der Mastereinheit zur ersten benachbarten Slaveeinheit und von dort zur nächsten bis zur letzten Slaveeinheit und dann zurück zur Mastereinheit.

Um eine Aufrechterhaltung der Datenkommunikation bei Auftreten eines Streckenfehlers auf dem Übertragungsweg, insbesondere bei Ausfall der Mastereinheit zu ermöglichen, ist erfindungsgemäß zusätzlich zur regulären Mastereinheit eine Ersatz-Mastereinheit im Master-Slave-Kommunikationssystem vorgesehen.

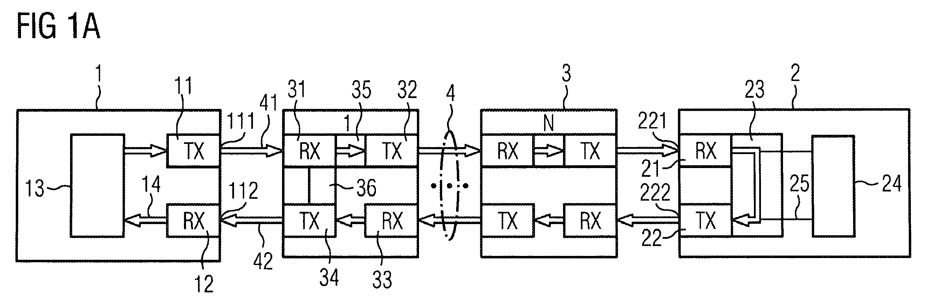

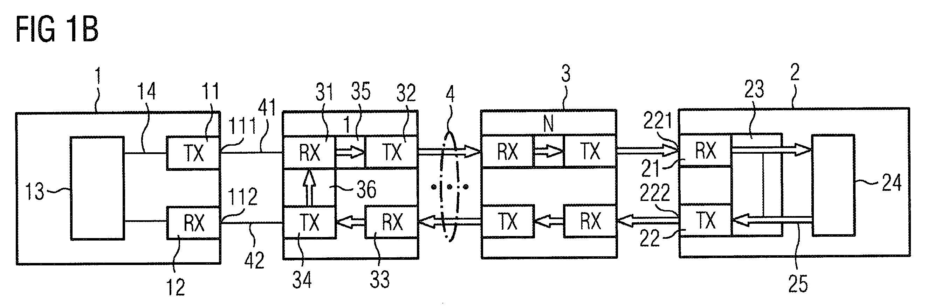

Fig. 1 zeigt im Prinzipschaltbild eine erste Ausführungsform eines solchen fehlertoleranten Master-Slave-Kommunikationssystems, wobei Fig. 1A den Normalbetrieb, bei dem der Datenaustausch durch die reguläre Mastereinheit erfolgt, und Fig. 1B einen Rekonfigurationsbetrieb bei Ausfall der regulären Mastereinheit und Datenübertragung durch die Ersatz-Mastereinheit darstellen. Das Master-Slave-Kommunikationssystem weist eine erste Mastereinheit 1 ,im Weiteren auch als Haupt-Mastereinheit bezeichnet, und eine zweite Mastereinheit 2 ,im Weiteren auch als Ersatz-Mastereinheit bezeichnet, auf, zwischen denen N Slaveeinheiten 3 geschaltet sind. Die Haupt-Mastereinheit 1 und die Ersatz-Mastereinheit 2 sind dabei über eine Doppelleitungsstruktur 4 mit den N Slaveeinheiten 3 verbunden. Die Doppelleitungsstruktur umfasst zwei getrennte Übertragungswege, die jeweils einen eigenständigen Kommunikationspfad 41, 42 bilden. Als Übertragungsweg kann dabei eine elektrische Leitung, ein Lichtfaserkabel oder ein Radiokabel dienen.

Die Haupt-Mastereinheit 1 weist eine Sendeeinheit TX 11 und eine Empfangseinheit RX 12 auf. Die Sendeeinheit TX 11 ist über einen ersten Anschluss 111 mit dem einen Ende des ersten Kommunikationspfads 41 und die Empfangseinheit RX 12 über einen zweiten Anschluss 112 mit dem einen Ende des zweiten Kommunikationspfads 42 verbunden. Ferner enthält die Mastereinheit 1 eine Steuereinheit 13, die über Steuerleitungen 14 an die Sendeeinheit TX 11 und die Empfangseinheit RX 12 angeschlossen ist.

Die Ersatz-Mastereinheit 2 weist eine Empfangseinheit RX 21 und eine Sendeeinheit TX 22 auf. Die Empfangseinheit RX 21 ist über einen ersten Anschluss 221 mit dem zweiten Ende des ersten Kommunikationspfads 41 und die Sendeeinheit TX 22 über einen zweiten Anschluss 222 mit dem zweiten Ende des zweiten Kommunikationspfads 42 verbunden. Die Ersatz-Mastereinheit 2 umfasst ferner eine Master-Kopplungseinrichtung 23, die zwischen eine Steuereinheit 24 und deren Steuerleitungen 25 und die Empfangseinheit RX 21 und die Sendeeinheit TX 22 geschaltet ist.

Jede Slaveeinheit 3 weist zum Empfang der Datenpakete von einem vorherigen Teilnehmer über den ersten Kommunikationspfad 41 einen ersten Anschluss mit einer ersten Empfangseinheit RX 31 und zur Weitergabe an den nächsten Teilnehmer über den ersten Kommunikationspfad 41 einen zweiten Anschluss mit einer ersten Sendeeinheit TX 32 auf. Ferner weist jede Slaveeinheit 3 zum Empfang der Datenpakete über den zweiten Kommunikationspfad 42 von einem vorherigen Teilnehmer einen dritten Anschluss mit einer zweiten Empfangseinheit RX 33 und zur Weitergabe über den zweiten Kommunikationspfad 42 an den folgenden Teilnehmer einen vierten Anschluss mit einer zweiten Sendeeinheit TX 34 auf. Die erste Empfangseinheit RX 31 der Slaveeinheit 3, die an den ersten Kommunikationspfad 41 angeschlossen ist, und die zweite Sendeeinheit TX 34, die an den zweiten Kommunikationspfad 42 angeschlossen ist, sind dabei zu einem gemeinsamen Port 0 zusammengefasst. Die zweite Empfangseinheit RX 33, die an den zweiten Kommunikationspfad 42 angeschlossen ist, und die Sendeeinheit TX 32, die an den ersten Kommunikationspfad 41 angeschlossen sind, sind zu einem gemeinsamen Port 1 zusammengefasst. Zwischen die erste Empfangseinheit RX 31 und die erste Sendeeinheit TX 32 ist eine Verarbeitungseinheit 35 in den ersten Kommunikationspfad 41 geschaltet. Der zweite Kommunikationspfad 42 wird durch die Slaveeinheit 3 von der Empfangseinheit RX 33 zur Sendeeinheit TX 34 durchgeschleift. Die der Haupt-Mastereinheit 1 benachbarte Slaveeinheit weist im an die Haupt-Mastereinheit 1 angeschlossenen Port 0 darüber hinaus eine Kopplungseinrichtung 36 auf, die zwischen die erste Empfangseinheit RX 31 und die zweite Sendeeinheit TX 34 geschaltet ist.

Fig. 1A zeigt den störungsfreien Normalbetrieb des Master-Slave-Kommunikationssystems. Die Richtung der Datenübertragung auf den Leitungen 14, 25 in den Master- bzw. Slaveeinheiten sowie auf den Kommunikationspfaden 41, 42 ist als Pfeil angezeigt, wobei die jeweils für die Datenübertragung genutzten Leitungen und Übertragungswege hervorgehoben sind. Beim störungsfreien Normalbetrieb wird ein von der zentralen Steuereinheit 13 der Haupt-Mastereinheit 1 erzeugtes Datenpaket über die Sendeeinheit TX 11 und den ersten Anschluss 111 auf den ersten Kommunikationspfad 41 ausgegeben. Das Telegramm wird dann von der ersten angeschlossenen Slaveeinheit 3 durch die erste Empfangseinheit RX 31 im Port 0 empfangen und über die in der Slaveeinheit 3 enthaltene Verarbeitungseinrichtung 35 an die erste Sendeeinheit TX 32 im Port 1 weitergeleitet, wobei das Datenpaket von der Verarbeitungseinheit 35 der Slaveeinheit 3 im Durchlauf verarbeitet wird. Die erste Sendeeinheit TX 32 im Port 1 der Slaveeinheit 3 sendet das Datenpaket dann auf den ersten Kommunikationspfad 41 an die in Datenübertragungsrichtung nächste Slaveeinheit 3.

Das Datenpaket durchläuft auf diese Weise nacheinander alle auf dem ersten Kommunikationspfad 41 angeschlossenen Slaveeinheiten 3 und wird von der letzten Slaveeinheit 3 auf den ersten Kommunikationspfad 41 über den ersten Anschluss 221 zur Empfangseinheit RX 21 der Ersatz-Mastereinheit 2 übertragen. Im Normalbetrieb schließt die Master-Kopplungseinrichtung 23 der Ersatz-Mastereinheit 2 die Empfangseinheit RX 21 und die Sendeeinheit TX 22 über die Steuerleitungen 25 kurz und die Sendeeinheit TX 22 der Ersatz-Mastereinheit 2 koppelt das Datenpaket über den Anschluss 222 auf den zweiten Kommunikationspfad 42 zurück. Das Datenpaket durchläuft dann, wie auf dem Hinweg, auch auf dem Rückweg in Datenübertragungsrichtung nacheinander die an den zweiten Kommunikationspfad 42 angeschlossenen Slaveeinheiten 3, ausgehend von der Slaveeinheit N bis zur Slaveeinheit 1, wobei das Datenpaket unverarbeitet durch die Slaveeinheiten 3 durchgeschleift wird.

Die in Datenübertragungsrichtung letzte Slaveeinheit am zweiten Kommunikationspfad 42 sendet dann das Datenpaket durch die zweite Sendeeinheit TX 34 im Port 0 über den zweiten Anschluss 112 der Haupt-Mastereinheit 1 an deren Empfangseinheit RX 12, von wo aus das Datenpaket dann zur zentralen Steuereinheit 13 weitergeleitet wird.

Fig. 1B zeigt den Verlauf der Datenübertragung im Master-Slave-Kommunikationssystem bei Ausfall der Haupt-Mastereinheit 1. Die Rekonfiguration der Datenübertragung bei Ausfall der Haupt-Mastereinheit 1 wird durch den Port 0 der ersten an die ausgefallene Haupt-Mastereinheit 1 angrenzenden Slaveeinheit 3 sowie die Master-Kopplungseinrichtung 23 der Ersatz-Mastereinheit 2 ausgelöst. Der Port 0 der an die Haupt-Mastereinheit angrenzenden Slaveeinheit 3 kann mithilfe eines Erkennungsverfahrens feststellen, ob über die beiden Kommunikationspfade 41, 42 mit der Haupt-Mastereinheit 1 kommuniziert werden kann. Wenn eine Unterbrechung der Kommunikation vom Port 0 der Slaveeinheit 3 erkannt wird, wird von der Slave-Kopplungseinrichtung 36 der Streckenfehlerbetrieb der Slaveeinheit 3 angestoßen. Die Slave-Kopplungseinrichtung 36 schließt dann den Anschluss der ersten Empfangseinheit RX 31 an den ersten Kommunikationspfad 41 und den Anschluss der zweiten Sendeeinheit TX 34 an den zweiten Kommunikationspfad 42. Gleichzeitig verbindet die Slave-Kopplungseinrichtung 36 den ersten Kommunikationspfad 41 mit dem zweiten Kommunikationspfad 42.

Parallel mit der Aufnahme des Streckenfehlerbetriebs durch die an die Haupt-Mastereinheit 1 angrenzende Slaveeinheit 3 beginnt die Ersatz-Mastereinheit 2 mit der Datenübertragung. Die Aufnahme des Streckenfehlerbetriebs der Ersatz-Mastereinheit 2 wird durch die Master-Kopplungseinrichtung 23 ausgelöst, die aufgrund des Ausfalls der Haupt-Mastereinheit 1 einen Timeout der Datenübertragung auf dem ersten Kommunikationspfad 41 feststellt. Die Master-Kopplungseinrichtung 23 hebt dann den Kurzschluss zwischen der Sendeeinheit TX 22 und der Empfangseinheit RX 21 auf und öffnet die Leitungsverbindung zwischen der zentralen Steuereinheit 24 und der Sendeeinheit TX 22 und der Empfangseinheit RX 21 über die Steuerleitungen 25.

Die Steuereinheit 24 stellt das Öffnen der Steuerleitungen 25 fest und beginnt dann automatisch mit dem Sendebetrieb, indem die Steuereinheit 24 ein von ihr erzeugtes Datenpaket über die Sendeeinheit TX 22 und den zweiten Anschluss 222 auf den zweiten Kommunikationspfad 42 ausgibt. Das Datenpaket durchläuft dann auf dem zweiten Kommunikationspfad 42 alle daran angeschlossenen Slaveeinheiten 3 nacheinander. Wenn das Datenpaket die an die ausgefallene Haupt-Mastereinheit 1 angrenzende, sich im Streckenfehlerbetrieb befindende Slaveeinheit 3 erreicht hat, wird es über den in der Slaveeinheit 3 von der Slave-Kopplungseinrichtung 36 erzeugten Kurzschluss vom zweiten Kommunikationspfad 42 auf den ersten Kommunikationspfad 41 umgeleitet, wobei auf dem Rückweg die Verarbeitungseinheit 35 in der sich im Streckenfehlerbetrieb befindenden Slaveeinheit 3 durchlaufen wird. Das Datenpaket wird dann von der sich im Streckenfehlerbetrieb befindenden Slaveeinheit 3 zu der auf dem ersten Kommunikationspfad 41 in Datenübertragungsrichtung benachbarten Slaveeinheit 3 weitergeleitet und von dort zur nächsten Slaveeinheit 3 bis das Datenpaket über den Anschluss 221 auf die Empfangseinheit RX 21 der Ersatz-Mastereinheit 2 rückgekoppelt ist, die das empfangene Datenpaket über die Steuerleitung 25 an die Steuereinheit 24 zur Auswertung weiterreicht. Der rekonfigurierte Datenübertragungsweg ist in Fig. 1B hervorgehoben und die Datenübertragungsrichtung mithilfe von Pfeilen gekennzeichnet.

Alternativ zu einer einzelnen Slaveeinheit mit einer Slave-Kopplungseinrichtung besteht auch die Möglichkeit, dass alle Slaveeinheiten eine solche Slave-Kopplungseinrichtung aufweisen. Bei Auftreten von Streckenfehlern, d.h. Unterbrechung des Übertragungsweges zwischen den Slaveeinheiten bzw. bei Ausfall einer Slaveeinheit können die benachbarten Slaveeinheiten dann jeweils den an den Streckenfehler angrenzenden Port schließen und den ersten Kommunikationspfad 41 mit dem zweiten Kommunikationspfad 42 verbinden. Die Datenübertragung kann dann zweigeteilt durchgeführt werden, wobei die Slaveeinheiten 3 auf der einen Seite bis zur der an den Streckenfehler angrenzenden Slaveeinheit über die Haupt-Mastereinheit 1 mit Datenpaketen versorgt werden. Auf der bezogen auf den Streckenfehler anderen Datenübertragungsseite dagegen sendet und empfängt die Ersatz-Mastereinheit 2. Es ist so möglich, die Datenübertragung nicht nur beim Ausfall der Haupt-Mastereinheit, sondern auch bei Auftreten eines Streckenfehlers durch Rekonfiguration der Datenübertragungswege unter Einsatz beider Mastereinheiten aufrechtzuerhalten.

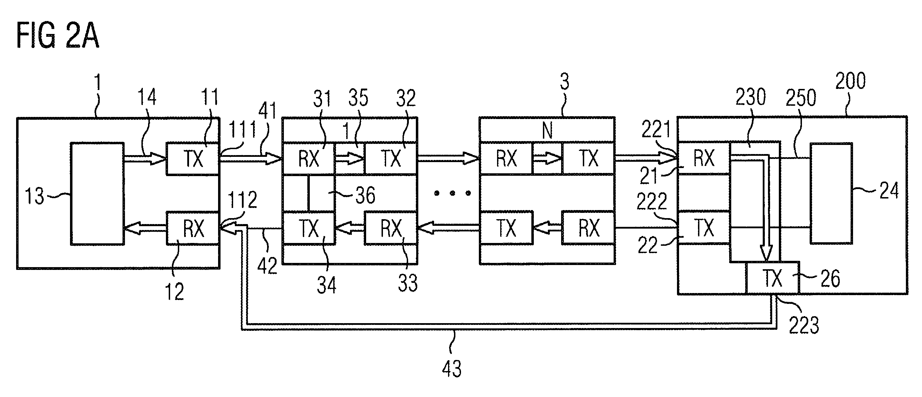

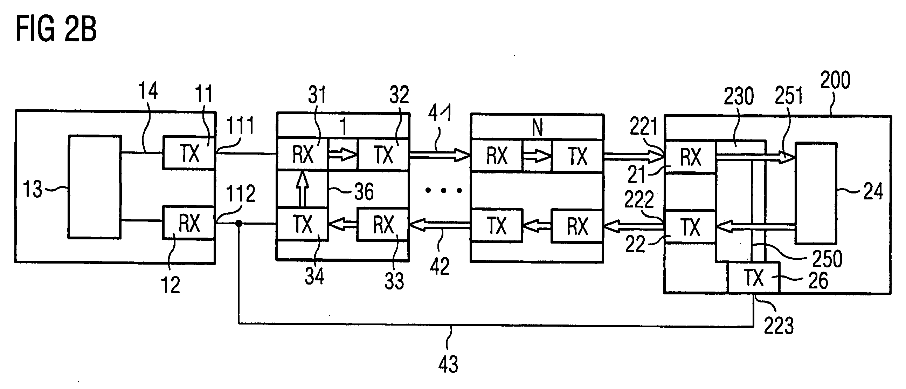

Fig. 2 zeigt eine zweite Ausführungsform eines erfindungsgemäßen Master-Slave-Kommunikationssystems, das einen Rekonfigurationsbetrieb bei Ausfall der Haupt-Mastereinheit durchführt. Bei den Prinzipschaltbilder in Fig. 2 sind dabei für gleichartige Bauteile dieselben Bezugszeichen wie bei in Fig. 1 gezeigten Ausführungsform verwendet sind. Die Haupt-Mastereinheit 1 und die Slaveeinheiten 3 entsprechend mit ihrem Aufbau den in Fig. 1 dargestellten Einheiten. Die Ersatz-Mastereinheit 200 weist zusätzlich zu den in Fig. 1 gezeigten Bauelementen einen dritten Anschluss 223 mit einer daran angeordneten zweiten Sendeeinheit TX 26 auf, wobei eine Master-Kopplungseinrichtung 230 zwischen Steuerleitungen 250 der Steuereinheit 24, die Empfangseinheit RX 21, die erste Sendeeinheit TX 22 und die zweite Sendeeinheit TX 26 geschaltet ist. Die zweite Sendeeinheit TX 26 ist über einen separaten dritten Master-Kommunikationspfad 43 mit der Empfangseinheit RX 12 der Haupt-Mastereinheit 1 verbunden.

Fig. 2A zeigt den Normalbetrieb bei Datenübertragung durch die Haupt-Mastereinheit 1 und Fig. 2B den Rekonfigurationsbetrieb bei Ausfall der Haupt-Mastereinheit 1 und Sendebetrieb durch die Ersatz-Mastereinheit 200. Beim störungsfreien Normalbetrieb, wie er in Fig. 2A dargestellt ist, erfolgt die Datenübertragung ausgehend von der Sende-Einheit TX 11 der Haupt-**Mastereinheit** 1 über den ersten Slave-Kommunikationspfad 41, wobei alle seriell angeschlossenen Slaveeinheiten 3 mit ihren Verarbeitungseinheiten 35 durchlaufen werden. Das Datenpaket wird dann von der letzten Slaveeinheit über den ersten Anschluss 221 an die Empfangseinheit RX 21 der Ersatz-Mastereinheit 200 weitergeleitet. Im Normalbetrieb hat die Master-Kopplungseinrichtung 230 der Ersatz-Mastereinheit die Empfangseinheit RX 21 mit der zweiten Sendeeinheit TX 26 kurzgeschlossen, so dass das Datenpaket von der zweiten Sendeeinheit TX 26 über den dritten Anschluss 223 und die dritte Master-Kommunikationsleitung 43 auf den zweiten Anschluss 112 und die Empfangseinheit RX 12 der Haupt-Mastereinheit 1 rückgekoppelt wird.

Der zweite Slave-Kommunikationspfad 42 wird im Normalbetrieb nicht benutzt und dient nur als Ersatzkommunikationspfad bei Auftreten eines Streckenfehlers, insbesondere bei Ausfall der Haupt-Mastereinheit 1, wie er in Fig. 2B dargestellt ist.

Bei dem in Fig. 2B gezeigten Rekonfiguration des Datenübertragungsweges, der sich nach Ausfall der Haupt-Mastereinheit 1 einstellt, schließt ähnlich wie bei der in Fig. 1 dargestellten Datenübertragungsweg-Rekonfiguration die an die Haupt-Mastereinheit 1 angrenzende Slaveeinheit 3 den Port 0 zur Haupt-Mastereinheit 1. Weiterhin verbindet die Slave-Kopplungseinrichtung 36 der Slaveeinheit 1 den ersten Kommunikationspfad 41 mit dem zweiten Kommunikationspfad 42. Gleichzeitig stellt die Master-Kopplungseinrichtung 230 der Ersatz-Mastereinheit 200 eine Verbindung der zentralen Steuereinheit 24 mit der ersten Sendeeinheit TX 22 und der ersten Empfangseinheit RX 21 her, unterbricht die im Normalbetrieb vorhandene Verbindung zwischen der ersten Empfangseinheit RX 21 und der zweiten Sendeeinheit TX 26 und schließt den dritten Anschluss 223 zum dritten Master-Kommunikationspfad 43.

Der Sendebetrieb durch die Ersatz-Mastereinheit 200 erfolgt dann analog dem in Fig. 1B dargestellten Sendebetrieb, bei dem das Datenpaket ausgehend von der Ersatz-Mastereinheit 200 über den zweiten Kommunikationspfad 42 bis zur an die Haupt-Mastereinheit 1 angrenzenden Slaveeinheit 3 weitergeleitet und dann über den ersten Kommunikationspfad 41 auf die Empfangseinheit RX 21 der Ersatz-Mastereinheit 200 rückgekoppelt wird.

Ferner besteht wie auch bei der in Fig. 1 gezeigten Ausführungsform die Möglichkeit, dass nicht nur die an die Haupt-Mastereinheit 1 angrenzende erste Slaveeinheit 3 eine Slave-Kopplungseinrichtung 36 zur Ausführung eines Fehlerbetriebs enthält, sondern auch die übrigen Slaveeinheiten 3, um gegebenenfalls einen zusätzlichen Rekonfigurationsbetrieb bei Auftreten eines Streckenfehlers ausführen zu können. Es besteht dann wiederum die Möglichkeit, dass die Datenübertragung zweigeteilt durchgeführt wird, wobei die Slaveeinheiten 3 auf der einen Seite bis zur der an den Streckenfehler angrenzenden Slaveeinheit 3 über die Haupt-Mastereinheit 1 mit Datenpaketen versorgt werden, auf der bezogen auf den Streckenfehler anderen Datenübertragungsseite dagegen die Ersatz-Mastereinheit 200 sendet und empfängt. Die Datenübertragung wird also nicht nur beim Ausfall der Haupt-Mastereinheit, sondern auch bei Auftreten eines Streckenfehlers durch Rekonfiguration der Datenübertragungswege unter Einsatz beider Mastereinheiten aufrecht erhalten.

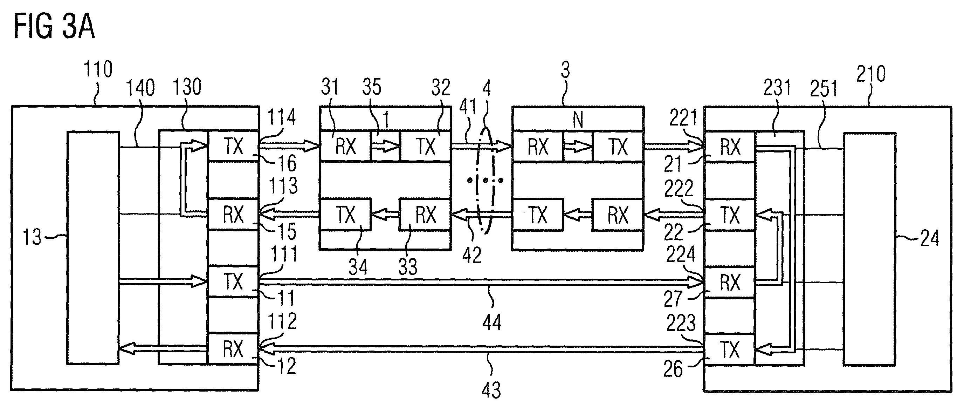

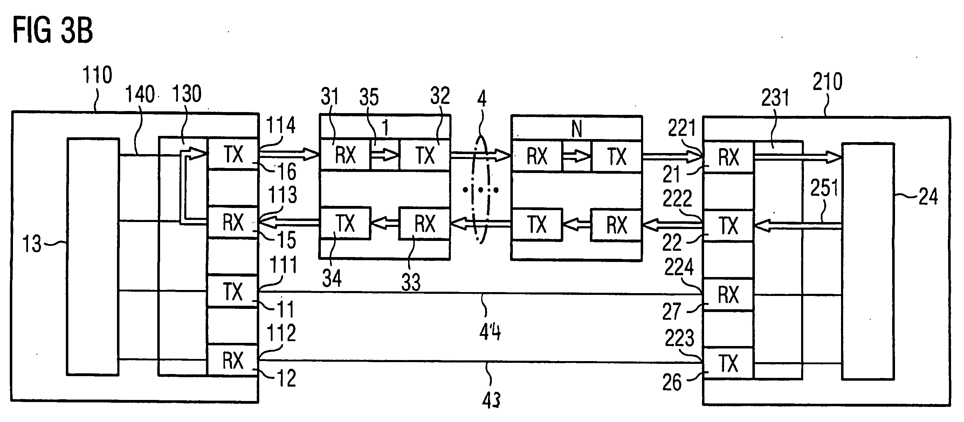

Fig. 3 zeigt im Prinzipbild eine dritte Ausführungsform eines erfindungsgemäßen fehlertoleranten Master-Slave-Kommunikationssystems, wobei Fig. 3A den Normalbetrieb und Fig. 3B einen Rekonfigurationsbetrieb bei Ausfall der Haupt-Mastereinheit durchführt. Bei den Darstellungen in den Fig. 3A und 3B sind dabei wieder gleichartige Bauteile mit denselben Bezugszeichen wie in Fig. 1 und 2 bezeichnet. Das Kommunikationssystem weist eine Haupt-Mastereinheit 110 auf, deren Empfangseinheit RX 12 über den zweiten Anschluss 112 mit einem ersten Master-Kommunikationspfad 43 und deren Sendeeinheit TX 11 über den Anschluss 111 mit einem zweiten Master-Kommunikationspfad 44 verbunden ist. Ferner ist eine zweite Sendeeinheit TX 16 und eine zweite Empfangseinheit RX 15 vorgesehen. Die zweite Sendeeinheit TX 16 ist über einen dritten Anschluss 114 mit dem ersten Kommunikationspfad 41 verbunden. Die zweite Empfangseinheit RX 15 ist über einen vierten Anschluss 113 mit dem zweiten Kommunikationspfad 42 verbunden.

Zwischen die erste Sendeeinheit TX 11, die erste Empfangseinheit RX 12, die zweite Sendeeinheit TX 16 und die zweite Empfangseinheit RX 15 und die Steuereinheit 13 der Haupt-Mastereinheit 110 ist eine Master-Kopplungseinrichtung 130 geschaltet, die Steuerleitungen 140 zwischen der zentralen Steuereinheit 13 und den Sende- bzw. Empfangseinheiten entsprechend dem jeweiligen Betriebsmodus, d.h. Normalbetrieb und Rekonfigurationsbetrieb durchschaltet.

Eine Ersatz-Mastereinheit 210 ist symmetrisch zur Hauptmastereinheit aufgebaut und weist, wie bei der in Fig. 3 gezeigten Ausführungsform zwei Sendeeinheiten TX 22, TX 26 auf, die über den ersten Anschluss 222 und den dritten Anschluss 223 mit dem zweiten Kommunikationspfad 42 bzw. dem ersten Master-kommunikationspfad 43 verbunden sind. Neben der Empfangseinheit RX 21, die über den zweiten Anschluss 221 mit dem ersten Kommunikationspfad 41 verbunden ist, ist eine weitere zweite Empfangseinheit RX 27 vorgesehen, die über einen vierten Anschluss 224 mit dem zweiten Master-Kommunikationspfad 44 verbunden ist. Zwischen die Steuereinheit 24 und den Sende- bzw. Empfangseinheiten RX 21, TX 22, TX 26, RX 27 ist in der Ersatz-Mastereinheit 210 eine Master-Kopplungseinrichtung 231 geschaltet, die Steuerleitungen 251 zwischen der zentralen Steuereinheit 24 und den Sende- bzw. Empfangseinheiten entsprechend dem jeweiligen Betriebszustand d.h. Normalbetrieb und Rekonfigurationsbetrieb durchschaltet.

Die Slaveeinheiten sind dabei analog den in Fig. 1 und 2 gezeigten Slaveeinheiten aufgebaut, mit einem Port 0 und einem Port 1, die jeweils eine Kombination aus einer Sendeeinheit und einer Empfangseinheit aufweisen. Es kann dabei jedoch in der der Haupt-Mastereinheit 110 benachbarten Slaveeinheit 3 auf eine Kopplungseinrichtung, die im Port 0 die erste Empfangseinheit RX 31 und die zweite Sendeeinheit TX 34 verbindet, verzichtet werden.

Fig. 3A zeigt den störungsfreien Normalbetrieb im Master-Slave-Kommunikationssystem. Die Richtung der Datenübertragung ist dabei als Pfeil angezeigt, wobei die jeweils für die Datenübertragung genutzten Leitungen und Übertragungswege hervorgehoben sind. Beim störungsfreien Normalbetrieb des Mas-ter-Slave-Kommunikationssystems wird ein Datenpaket von der zentralen Steuereinheit 13 der Haupt-Mastereinheit 110 über die Master-Kopplungseinrichtung 130 an die erste Sendeeinheit TX 11 weitergeleitet, die das Datenpaket auf den zweiten Master-Kommunikationspfad 44 ausgibt. Das Telegramm wird dann von der an diesem zweiten Master-Kommunikationspfad 44 angeschlossenen zweiten Empfangseinheit RX 27 der Ersatz-Mastereinheit 210 empfangen und durch Kurzschlussschaltung der Steuerleitung 251 durch die Master-Kopplungseinrichtung 321 auf die erste Sendeeinheit TX 22 gekoppelt, die das Datenpaket über den zweiten Kommunikationspfad 42 auf die daran angeschlossene Slaveeinheit N ausgibt.

Das Datenpaket wird dann durch alle seriell am zweiten Kommunikationspfad 42 angeschlossenen Salveeinheiten durchschleift und von der der Haupt-Mastereinheit 110 benachbarten Slaveeinheit 3 auf die zweite Empfangseinheit RX 15 der Haupt-Mastereinheit 110 übertragen. In der Haupt-Mastereinheit 110 schaltet im Normalbetrieb die Master-Kopplungseinrichtung 130 die zweite Empfangseinheit RX 15 auf die zweite Sendeeinheit TX 16 auf, die das empfangene Datenpaket dann auf den ersten Kommunikationspfad 41 aufgibt. Das Datenpaket durchläuft dann wiederum alle seriell an diesen ersten Kommunikationspfad 41 angeordnete Slaveeinheiten, wobei das Datenpaket im Durchlauf durch die jeweils im Datenpfad angeordnete Verarbeitungseinrichtung 35 verarbeitet wird. Von der letzten Slaveeinheit N wird das Datenpaket dann auf die erste Empfangseinheit RX 21 der Ersatz-Mastereinheit 210 rückgekoppelt, die über die Master-Kopplungseinrichtung 231 mit der zweiten Sendeeinheit TX 26 kurzgeschaltet ist. Die zweite Sendeeinheit TX 26 sendet das Datenpaket dann über den ersten Master-Kommunikationspfad 43 zur ersten Empfangseinheit RX 12 der Haupt-Mastereinheit 110 zurück, die das Datenpaket zur Auswertung an die Steuereinheit 13 weiterleitet.

Bei Ausfall der Hauptmastereinheit geht das Master-Slave-Kommunikationssystem in den in Fig. 3B gezeigten StreckenFehlerbetrieb über. Die Master-Kopplungseinrichtung 231 in der Ersatz-Mastereinheit 210 stellt einen Timeout bei der Datenübertragung von der Haupt-Mastereinheit 110 auf dem zweiten Master-Kommunikationspfad 44 fest, hebt die Kurzschlüsse zwischen der ersten Empfangseinheit RX 21 und der zweiten Sendeeinheit TX 26 bzw. der zweiten Empfangseinheit RX 27 und der ersten Sendeeinheit TX 22 auf. Die Steuereinheit 24 der Ersatz-Mastereinheit 210 stellt das Öffnen der Kurzschlüsse fest und beginnt automatisch mit dem Sendebetrieb, indem ein von der zentralen Steuereinheit 24 erzeugtes Datenpaket über die erste Sendeeinheit TX 22 und den zweiten Anschluss 222 auf den zweiten Kommunikationspfad 42 ausgegeben wird. Das Datenpaket durchläuft dann die an den zweiten Kommunikationspfad 42 angeschlossenen Slaveeinheiten und die Haupt-Mastereinheit analog zum Normalbetrieb, wobei die Haupt-Mastereinheit den ersten und den zweiten Kommunikationspfad über die Kopplungseinrichtung 130 kurzschließt. Das anschließend auf dem Rückweg über den ersten Kommunikationspfad 41 durch die Slaveeinheiten verarbeitete Datenpaket wird dann von der ersten Empfangseinheit RX 21 der Ersatz-Mastereinheit 210 empfangen und an die Steuereinheit 24 zur Auswertung weitergeleitet.

Mit der in Fig. 3 gezeigten Ausführungsform besteht die Möglichkeit, die Haupt-Mastereinheit und die Ersatz-Mastereinheit identisch aufzubauen. In der Haupt-Mastereinheit kann alternativ aber auch auf die Kopplungseinrichtung und den zweiten Port mit der zweiten Sendeeinheit TX 16 und der zweiten Empfangseinheit RX 15 verzichten werden. In diesem Fall muss dann die Rückkopplung des Datenpaketes vom zweiten Kommunikationspfad 42 auf den ersten Kommunikationspfad 41 in der letzten Slaveeinheit 3 vor der Master-Einheit über eine zusätzliche Kopplungseinrichtung 36, wie sie in den Fig. 1 und 2 gezeigten Slaveeinheit im Port 0 enthalten ist, rückgekoppelt werden.

Alternativ besteht auch die Möglichkeit, dass, wenn statt des Ausfalls der Haupt-Mastereinheit die Datenkommunikationsleitung zwischen den Slaveeinheiten unterbrochen ist bzw. eine Slaveeinheit ausgefallen ist und die Slaveeinheiten jeweils Kopplungseinrichtungen zwischen dem ersten und dem zweiten Kommunikationspfad aufweisen, die Datenübertragung zweiteilig ausgeführt wird, wobei die Slaveeinheiten auf der einen Seite des Streckenfehlers von der Haupt-Mastereinheit 110 mit Datenpaketen versorgt werden. Auf der bezogen auf den Streckenfehler anderen Datenübertragungsseite dagegen überträgt die Ersatz-Mastereinheit 210 die Datenpakete. Die Haupt-Mastereinheit 110 sendet dabei über die zweite Sendeeinheit TX 16 und empfängt über die zweite Empfangseinheit RX 15, die entsprechend von der Kopplungseinrichtung 130 auf die Steuereinheit 13 durchgeschaltet werden. In der Ersatz-Mastereinheit 210 sendet die erste Sendeeinheit TX 22 und empfängt über die erste Empfangseinheit RX 21, die von der Kopplungseinrichtung 231 hierfür mit der zentralen Steuereinheit 24 verbunden werden. Mit der in Fig. 3 gezeigten Ausführungsform ist somit eine maximale Fehlertoleranz im Master-Slave-Kommunikationssystem möglich.

## Patentansprüche

1. Mastereinheit (200; 210) mit
einer Sendeeinheit (22) zum Senden von Datensignalen, die über einen ersten Anschluss (222) mit einem ersten Kommunikationspfad (41) verbunden werden kann,
einer Empfangseinheit (21) zum Empfangen von Datensignalen, die über einen zweiten Anschluss (221) mit einem zweiten Kommunikationspfad (42) verbunden werden kann,
einer Steuereinheit (24) zum Übertragen von Datensignalen, und
einer Master-Kopplungseinrichtung (230; 231), die zwischen die Steuereinheit (24), die Sendeeinheit (22) und die Empfangseinheit (21) geschaltet ist,
**dadurch gekennzeichnet, dass**
die Master-Kopplungseinrichtung (230; 231) ausgelegt ist, um in einem ersten Betriebsmodus die Steuereinheit (24) von der Empfangseinheit (21) und der Sendeeinheit (22) zu trennen und die Empfangseinheit (21) mit einer weiteren Sendeeinheit (26) zum Senden von Datensignalen, die über einen dritten Anschluss (223) mit einer ersten regulären Mastereinheit (1; 110) über einen dritten Kommunikationspfad (43) verbunden ist, kurzzuschließen, und um in einem zweiten Betriebsmodus die Steuereinheit (24) mit der Empfangseinheit (21) und der Sendeeinheit (22) zu verbinden, um eine Datenübertragung auf dem ersten und zweiten Kommunikationspfad (41, 42) durchzuführen.

2. Mastereinheit nach Anspruch 1, **gekennzeichnet durch** eine weitere Empfangseinheit (27) zum Empfangen von Datensignalen, die über einen vierten Anschluss (224) mit einem vierten Kommunikationspfad (44) verbunden werden kann,
wobei die Master-Kopplungseinrichtung (231) ausgelegt ist, um im ersten Betriebsmodus die Empfangseinheit (21) mit der weiteren Sendeeinheit (26) und die weitere Empfangseinheit (27) mit der Sendeeinheit (22) kurzzuschließen.

3. Mastereinheit nach Anspruch 1 oder 2, **dadurch gekennzeichnet, dass** die Mastereinheit (200; 210) ausgelegt ist, den Ausfall eines Sendebetrieb einer weiteren Mastereinheit festzustellen, um dann vom ersten auf den zweiten Betriebmodus umzuschalten.

4. Kommunikationssystem mit einer ersten Mastereinheit (1; 110), einer zweiten Mastereinheit (200; 210) nach einem der Ansprüche 1 bis 3 und wenigstens einer Slaveeinheit (3), die über eine den ersten Kommunikationspfad (41) und den zweiten Kommunikationspfad (42) aufweisende Doppelleitungsstruktur (4; 41, 42, 43, 44) miteinander verbunden sind,
wobei die erste Mastereinheit (1; 110) eine Sendeeinheit (11) zum Senden von Datensignalen, die über einen ersten Anschluss (111) mit der Doppelleitungsstruktur (4; 41, 42, 43, 44) verbunden ist, eine Empfangseinheit (12) zum Empfangen von Datensignalen, die über einen zweiten Anschluss (112) mit der Doppelleitungsstruktur (4; 41, 42, 43, 44) verbunden ist, und eine Steuereinheit (13) zum Übertragen von Datensignalen, die mit der Sendeeinheit und der Empfangseinheit verbunden ist, aufweist.

5. Kommunikationssystem nach Anspruch 4,
wobei die Slaveeinheit (3) eine Slave-Kopplungseinrichtung (36) und einen ersten, zweiten, dritten und vierten Anschluss (31, 32, 33, 34) aufweist,
wobei der erste Anschluss (31) der Slaveeinheit (3) mit der Sendeeinheit (11) der ersten Mastereinheit (1) und der zweite Anschluss (32) der Slaveeinheit (3) mit der Empfangseinheit (21) der zweiten Mastereinheit (200) über den ersten Kommunikationspfad (41) der Doppelleitungsstruktur (4), der dritte Anschluss (33) der Slaveeinheit (3) mit der Sendeeinheit (22) der zweiten Mastereinheit (200) und der vierte Anschluss (34) der Slaveeinheit (3) mit der Empfangseinheit (12) der ersten Mastereinheit (1) über den zweiten Kommunikationspfad (42) der Doppelleitungsstruktur (4), die weitere Sendeeinheit (26) der zweiten Mastereinheit (200) mit der Empfangseinheit (12) der ersten Mastereinheit (1) über den dritten Kommunikationspfad (43) der Doppelleitungsstruktur (4) verbunden sind, wobei im ersten Betriebsmodus die Master-Kopplungseinrichtung (230) der zweiten Mastereinheit (200) die Empfangseinheit (21) der zweiten Mastereinheit (200) mit der weiteren Sendeeinheit (26) der zweiten Mastereinheit (200) kurzschließt, und
wobei im zweiten Betriebsmodus die Slave-Kopplungseinrichtung (36) der Slaveeinheit (3) den ersten Anschluss (31) der Slaveeinheit mit dem vierten Anschluss (34) der Slaveeinheit kurzschließt und die Master-Kopplungseinrichtung (230) der zweiten Mastereinheit (200) zur Datenübertragung auf dem ersten und zweiten Kommunikationspfad (41, 42) den Kurzschluss der Empfangseinheit (21) der zweiten Mastereinheit (200) mit der weiteren Sendeeinheit (26) der zweiten Mastereinheit (200) aufhebt und die Steuereinheit (24) mit der Sendeeinheit (22) und der Empfangseinheit (21) verbindet.

## Claims

1. Master unit (200; 210) having
a transmission unit (22) for transmitting data signals that is able to be connected via a first port (222) to a first communication path (41),
a reception unit (21) for receiving data signals that is able to be connected via a second port (221) to a second communication path (42),
a control unit (24) for transmitting data signals, and
a master coupling device (230; 231) that is connected between the control unit (24), the transmission unit (22) and the reception unit (21),
**characterized in that**
the master coupling device (230; 231) is designed to isolate the control unit (24) from the reception unit (21) and the transmission unit (22) and to short the reception unit (21) to a further transmission unit (26) for transmitting data signals, which is connected via a third port (223) to a first regular master unit (1; 110) via a third communication path (43), in a first mode of operation and to connect the control unit (24) to the reception unit (21) and the transmission unit (22) in a second mode of operation, in order to perform data transmission on the first and second communication paths (41, 42).

2. Master unit according to Claim 1, **characterized by** a further reception unit (27) for receiving data signals that is able to be connected via a fourth port (224) to a fourth communication path (44), wherein the master coupling device (231) is designed to short the reception unit (21) to the further transmission unit (26) and the further reception unit (27) to the transmission unit (22) in the first mode of operation.

3. Master unit according to Claim 1 or 2, **characterized in that** the master unit (200; 210) is designed to detect failure of a transmission mode of a further master unit in order then to change over from the first to the second mode of operation.

4. Communication system having a first master unit (1; 110), a second master unit (200; 210) according to one of Claims 1 to 3 and at least one slave unit (3), which are connected to one another via a dual line structure (4; 41, 42, 43, 44) having the first communication path (41) and the second communication path (42),
wherein the first master unit (1; 110) has a transmission unit (11) for transmitting data signals that is connected via a first port (111) to the dual line structure (4; 41, 42, 43, 44), a reception unit (12) for receiving data signals that is connected via a second port (112) to the dual line structure (4; 41, 42, 43, 44), and a control unit (13) for transmitting data signals that is connected to the transmission unit and the reception unit.

5. Communication system according to Claim 4,
wherein the slave unit (3) has a slave coupling device (36) and a first, a second, a third and a fourth port (31, 32, 33, 34),
wherein the first port (31) of the slave unit (3) is connected to the transmission unit (11) of the first master unit (1) and the second port (32) of the slave unit (3) is connected to the reception unit (21) of the second master unit (200) via the first communication path (41) of the dual line structure (4), the third port (33) of the slave unit (3) is connected to the transmission unit (22) of the second master unit (200) and the fourth port (34) of the slave unit (3) is connected to the reception unit (12) of the first master unit (1) via the second communication path (42) of the dual line structure (4), the further transmission unit (26) of the second master unit (200) is connected to the reception unit (12) of the first master unit (1) via the third communication path (43) of the dual line structure (4), wherein in the first mode of operation the master coupling device (230) of the second master unit (200) shorts the reception unit (21) of the second master unit (200) to the further transmission unit (26) of the second master unit (200), and
wherein in the second mode of operation the slave coupling device (36) of the slave unit (3) shorts the first port (31) of the slave unit to the fourth port (34) of the slave unit and the master coupling device (230) of the second master unit (200), for the purpose of data transmission on the first and second communication paths (41, 42), removes the short from the reception unit (21) of the second master unit (200) to the further transmission unit (26) of the second master unit (200) and connects the control unit (24) to the transmission unit (22) and the reception unit (21).

## Revendications

1. Unité maître (200 ; 210) comprenant une unité d'émission (22) destinée à émettre des signaux de données, laquelle peut être reliée à un premier chemin de communication (41) par le biais d'une première borne (222),
une unité de réception (21) destinée à recevoir des signaux de données, laquelle peut être reliée à un deuxième chemin de communication (42) par le biais d'une deuxième borne (221),
une unité de commande (24) destinée à transmettre des signaux de données,
et
un dispositif de connexion maître (230 ; 231) qui est branché entre l'unité de commande (24), l'unité d'émission (22) et l'unité de réception (21), **caractérisée en ce que**
le dispositif de connexion maître (230 ; 231) est conçu pour, dans un premier mode de fonctionnement, déconnecter l'unité de commande (24) de l'unité de réception (21) et de l'unité d'émission (22) et court-circuiter l'unité de réception (21) avec une unité d'émission supplémentaire (26) destinée à émettre des signaux de données, laquelle est reliée par le biais d'une troisième borne (223) à une première unité maître régulière (1 ; 110) par le biais d'un troisième chemin de communication (43), et pour, dans un deuxième mode de fonctionnement, relier l'unité de commande (24) à l'unité de réception (21) et à l'unité d'émission (22) afin d'effectuer une transmission de données sur les premier et deuxième chemins de communication (41, 42).

2. Unité maître selon la revendication 1, **caractérisée par** une unité de réception supplémentaire (27) destinée à recevoir des signaux de données, laquelle peut être reliée à un quatrième chemin de communication (44) par le biais d'une quatrième borne (224),
le dispositif de connexion maître (231) étant conçu pour, dans le premier mode de fonctionnement, court-circuiter l'unité de réception (21) avec l'unité d'émission supplémentaire (26) et l'unité de réception supplémentaire (27) avec l'unité d'émission (22).

3. Unité maître selon la revendication 1 ou 2, **caractérisée en ce que** l'unité maître (200 ; 210) est conçue pour constater la panne d'un régime d'émission d'une unité maître supplémentaire et basculer alors du premier au deuxième mode de fonctionnement.

4. Système de communication comprenant une première unité maître (1 ; 110), une deuxième unité maître (200 ; 210) selon l'une des revendications 1 à 3 et au moins une unité esclave (3) qui sont reliées ensemble par le biais d'une structure à double ligne (4 ; 41, 42, 43, 44) qui présente le premier chemin de communication (41) et le deuxième chemin de communication (42),
la première unité maître (1 ; 110) possédant une unité d'émission (11) destinée à émettre des signaux de données, laquelle est reliée à la structure à double ligne (4 ; 41, 42, 43, 44) par le biais d'une première borne (111), une unité de réception (12) destinée à recevoir des signaux de données, laquelle est reliée à la structure à double ligne (4 ; 41, 42, 43, 44) par le biais d'une deuxième borne (112), et une unité de commande (13) destinée à transmettre des signaux de données, laquelle est reliée à l'unité d'émission et à l'unité de réception.

5. Système de communication selon la revendication 4,
dans lequel l'unité esclave (3) possède un dispositif de connexion esclave (36) et une première, une deuxième, une troisième et une quatrième borne (31, 32, 33, 34),
la première borne (31) de l'unité esclave (3) étant reliée à l'unité d'émission (11) de la première unité maître (1) et la deuxième borne (32) de l'unité esclave (3) à l'unité de réception (21) de la deuxième unité maître (200) par le biais du premier chemin de communication (41) de la structure à double ligne (4), la troisième borne (33) de l'unité esclave (3) à l'unité d'émission (22) de la deuxième unité maître (200) et la quatrième borne (34) de l'unité esclave (3) à l'unité de réception (12) de la première unité maître (1) par le biais du deuxième chemin de communication (42) de la structure à double ligne (4), l'unité d'émission supplémentaire (26) de la deuxième unité maître (200) à l'unité de réception (12) de la première unité maître (1) par le biais du troisième chemin de communication (43) de la structure à double ligne (4),
système dans lequel, dans le premier mode de fonctionnement, le dispositif de connexion maître (230) de la deuxième unité maître (200) court-circuite l'unité de réception (21) de la deuxième unité maître (200) avec l'unité d'émission supplémentaire (26) de la deuxième unité maître (200),
et
système dans lequel, dans le deuxième mode de fonctionnement, le dispositif de connexion esclave (36) de l'unité esclave (3) court-circuite la première borne (31) de l'unité esclave avec la quatrième borne (34) de l'unité esclave et le dispositif de connexion maître (230) de la deuxième unité maître (200), en vue de la transmission de données sur les premier et deuxième chemins de communication (41, 42), annule le court-circuit de l'unité de réception (21) de la deuxième unité maître (200) avec l'unité d'émission supplémentaire (26) de la deuxième unité maître (200) et relie l'unité de commande (24) à l'unité d'émission (22) et à l'unité de réception (21).
